# EUROPÄISCHE PATENTSCHRIFT

(11) **EP 0 742 420 B1**
(45) Veröffentlichungstag und Bekanntmachung des Hinweises auf die Patenterteilung: **23.02.2005**
(21) Anmeldenummer: 95119785.4
(22) Anmeldetag: 15.12.1995
(51) Int. Cl.: F41G 7/30

(54) **Verfahren zum Bestimmen der Rollage eines rollenden Flugobjektes**
Method for determining the roll position of a rotating flying object
Procédé de détermination de la position angulaire d'un objet volant en rotation sur lui-même

(30) Priorität: 14.01.1995 DE 19500993
(43) Veröffentlichungstag der Anmeldung: 13.11.1996
(73) Patentinhaber: Oerlikon Contraves Gesellschaft mit beschränkter Haftung, 78333 Stockach (DE)
(72) Erfinder: Seidensticker, Jens, Dr., D-78351 Bodman-Ludwigshafen (DE); Kreuzer, Wolfgang, Dr., D-78333 Stockach 1 (DE)
(74) Vertreter: Weiss, Peter, Dr. rer. nat.

(56) Entgegenhaltungen:
- EP-A- 0 239 156
- EP-A- 0 341 772
- EP-A- 0 343 131
- EP-A- 0 345 836
- EP-A- 0 453 423
- EP-A- 0 521 839
- US-A- 4 405 986

## Beschreibung

Die Erfindung betrifft ein Verfahren zum Bestimmen der Rolllage eines rollenden Flugobjektes mit Funkempfänger, insbesondere zur Lenkung eines/r ballistisch fliegenden Projektils/Rakete mit Rollausgleich, wobei eine Position des Flugobjektes und sein Geschwindigkeitsvektor ermittelt werden, der Geschwindigkeitsvektor des Flugobjektes als Referenz für seine Rollachse gewählt wird und eine Sichtlinie aus den bekannten Positionen von Flugobjekt und Sendequelle bestimmt wird.

Bei ballistisch fliegenden Projektilen/Raketen aber auch bei anderen Flugobjekten ist die Bestimmung der Rolllage von entscheidender Bedeutung, sofern eine nachträgliche Lenkung dieser Flugobjekte während der Mission erfolgen soll. Insbesondere gilt dies für die Lenkung von ballistisch fliegenden Projektil/Raketen, bei denen die Möglichkeit einer Flugbahnkorrektur vorgesehen ist, wie beispielsweise in der DE 44 01 315 A1 beschrieben wird.

Im vorliegenden Fall handelt es sich vorwiegend um Flugobjekte, deren Drehbewegung um die Rollachse besonders ausgeprägt ist. Die Drehbewegungen um die anderen Körperachsen (Nick- und Gierbewegung) sind im Vergleich dazu gering. Dabei wird vorrausgesetzt, dass die Position und der Geschwindigkeitsvektor des Flugobjektes durch Messung bekannt ist. Ferner werden Flugobjekte mit quasi stabiler, d.h. langsam veränderlicher Rollfrequenz betrachtet, da nur für diese Bewegungsart mit dem hier vorgestellten Verfahren eine gesicherte Bestimmung der Rolllage nicht nur zu einzelnen Zeitpunkten möglich ist.

Aus der US 4,405,986 ist ein System bekannt, das eine Positionsbestimmung und eine Geschwindigkeitsvektorbestimmung eines Flugobjektes mittels des Global Positioning Systems offenbart. Zusätzlich werden unter Ausnutzung des Dopplereffektes die Geschwindigkeiten des Flugobjektes um die Roll-, Nick- und Gierachse des Flugobjekts bestimmt. Durch Korrelation und/oder Vergleich der Geschwindigkeiten können Informationen bezüglich der Roll-, Nick- und Gierbewegung gewonnen werden.

Grundsätzlich kann die Rolllage eines Objektes mittels Lagereferenzkreisel oder anderen Trägheitsreferenzsystemen bestimmt werden. Diese Vorrichtungen bzw. Systeme sind mechanische Präzisionsgeräte und daher entsprechend teuer.

Der vorliegenden Erfindung liegt die Aufgabe zugrunde, ein Verfahren der oben genannten Art zu entwickeln, mittels welchem eine relativ genaue Bestimmung der Rolllage des Flugobjektes erfolgt und welches einen wesentlich geringeren Aufwand voraussetzt. Der Aufwand wird dann besonders gering, wenn Antennen- und Empfängerausstattung bereits aus anderen zwingenden Gründen vorhanden sind.

Zur Lösung dieser Aufgabe führt, dass die Rolllage des Flugobjektes aus dem/n Zeitpunkt/en, in dem/nen sich die Hauptantennenachse der Sichtlinie maximal nähert oder mit ihr zusammenfällt, ermittelt wird.

Dabei benötigt das Verfahren die Einrichtung zum Funkempfang und eine Auswerteeinheit. Vorzugsweise wird ein bereits bei der Rakete bzw. bei dem Flugobjekt vorhandener Funkempfänger benutzt. Auch werden bevorzugt bereits als Sendequelle vorhandene Satelliten, wie beispielsweise TV-Satelliten, Wettersatelliten, NAVSTAR-Satelliten benutzt, jedoch sind auch boden- oder fahrzeuggestützte Sendequellen denkbar.

Ist bereits ein GPS (Global Positioning System) in der Projektil/Projektil/Rakete zur Positionsbestimmung vorhanden, so können auch dessen Antenne(n) und die NAVSTAR-Satelliten für die Rolllagebestimmung benutzt werden. Der Aufwand wird somit auf einem Minimum gehalten.

Grundgedanke der vorliegenden Erfindung ist, dass die Sichtlinie zwischen Satellit und Antenne durch das Abschatten der Antenne beim Rollen des Flugkörpers teilweise unterbrochen wird. Das bedeutet, dass ein Signalmaß, dargestellt über die Zeit, z.B. Intensitätssättel ausbildet, in denen die Antenne die Signale der Sendequelle empfängt. Dazwischen liegen abgeschattete Bereiche, in denen kein Empfang stattfindet. Bevorzugt wird das Empfangssignal gemittelt. Dabei sind drei Möglichkeiten denkbar, und zwar einmal, dass die Mittelungszeit kleiner als 1/2 Umdrehung dauert, dass sie gleich 1/2 Umdrehungsdauer oder dass sie größer als 1/2 Umdrehungsdauer ist.

Aus der Anstiegs- und/oder der Abstiegsflanke des Signalmaßes wird die Rollfrequenz bestimmt. Die Mitte des Signalmaßes zeigt den Zeitpunkt, verzögert um die bekannte Systemtotzeit, an, zu dem die Sichtlinie zwischen Flugobjekt und Sendequelle und die Antennenhauptachse sich maximal annähern.

Bei Kenntnis der Position des Flugobjektes über beispielsweise das Global Positioning System (GPS) ist auch das geostationäre Koordinationssystem festgelegt und damit die Referenz für den Rollwinkel gegeben. Aus der Kenntnis der Position von Flugobjekt und Satellit kann nun wiederum die Richtung der Sichtlinie bestimmt werden. Der Geschwindigkeitsvektor des Flugobjektes wird als Referenz für die Rollachse gewählt. Aus Rollachse und Sichtlinie lassen sich das flugobjekteigene und das geostationäre Koordinationssystem koordinieren und daraus sich die Rolllage zum Zeitpunkt, in dem sich die Hauptantennenachse der Sichtlinie maximal nähert, bestimmen. Zwischen diesen Zeitpunkten wird der Rollwinkel aus der Rollfrequenz und der Zeitspanne nach der letzten Referenzmessung ermittelt.

Im Rahmen der Erfindung liegt selbstverständlich auch, dass mehrere Sendequellen zur Ermittlung benutzt werden bzw. dass mehrere Empfangsantennen am Umfang des Flugobjektes verteilt angeordnet sind. Diese Möglichkeiten erlauben eine noch genauere Bestimmung der Rolllage.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 eine schematische Darstellung der Beziehung zwischen einem Flugkörper und einem Satelliten;
Fig. 2 eine diagrammartige Darstellung des erfindungsgemäßen Verfahrens zum Bestimmen der Rollage eines Flugobjektes;

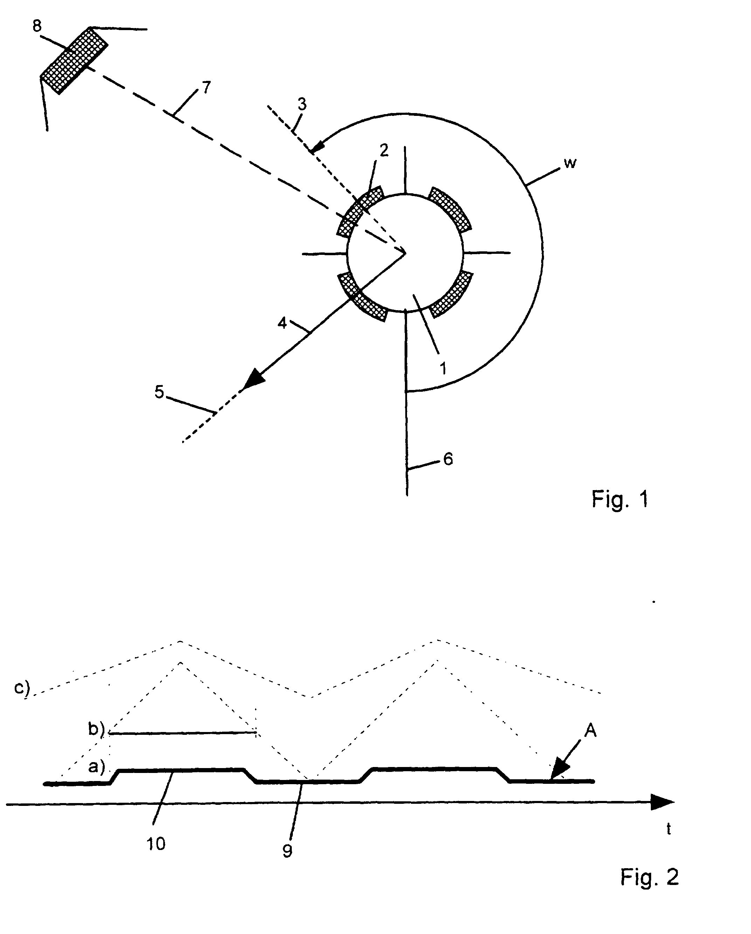

Gemäß Fig. 1 ist schematisch ein Flugobjekt 1 mit Antennen 2 und einer Antennenhauptachse 3 dargestellt. Dieses Flugobjekt hat einen Geschwindigkeitsvektor 4 und eine Rollachse 5. Der Pfeil w stellt den Rollwinkel des Flugobjektes 1 gegenüber einer vertikalen Referenzachse (VRA) 6 dar. Gestrichelt ist eine Sichtlinie 7 zu einem Satelliten 8 angedeutet.

Anhand dieser Sichtlinie 7 erfolgt die Bestimmung der Rollage des Flugobjektes 1, wobei die Position des Satelliten 8 und seine Sendefrequenz bekannt ist.

Die Funktionsweise des vorliegenden Verfahrens ist folgende:

Durch die Rollbewegung des Flugobjektes 1 wird durch seinen Körper die am Flugobjekt 1 montierte Antenne 2 teilweise abgeschattet. Das bedeutet, daß es Zeitabschnitte mit Empfang und Zeitabschnitte ohne Empfang gibt. Das betrachtete Signalmaß ist in dem Diagramm gemäß Fig. 2 mit A gekennzeichnet. Wird das Signalmaß A (hier als Intensität dargestellt) über der Zeit t aufgetragen, so gibt es abgeschattete Bereiche 9 und dazwischen Signalverläufe 10, in denen ein Empfang der Antenne 2 von Signalen des Satelliten 8 möglich ist. Der Abstand von zwei Signalverläufen 10 ist 2π/f, wobei f die Rollfrequenz des Flugobjektes ist.

Durch eine scharfe Abstimmung von Empfangskreisen und durch besondere Aufbereitung der Empfangssignale wird das Nutzsignal des Satelliten 8 aus dem Hintergrundrauschen erkannt und dafür ein Signal gebildet. Dabei ist das absolute Signalmaß kein Auswertekriterium, entscheidend ist der qualitative Verlauf über die Zeit.

Durch Auswertung des gemittelten Signalverlaufes 10 erfolgt die Bestimmung der Rollage. Dabei sind mehrere Möglichkeiten denkbar. Mit a) ist die Möglichkeit einer Mittelungszeit angedeutet, die kleiner als 1/2 Umdrehungsdauer ist, b) ist die Mittelungszeit bei 1/2 Umdrehungsdauer und c) ist die Mittelungszeit bei einer Umdrehungsdauer von größer als 1/2.

Die Rollfrequenz wird aus der Anstiegs- und/oder der Abstiegsflanke des Signalmaßes bzw. des Intensitätssattels 10 bestimmt. Die Mitte jedes Intensitätssattels zeigt den Zeitpunkt, verzögert um die bekannte Systemtotzeit (Auswertezeit), an, zu dem die Antennenhauptachse 3 sich der Sichtlinie 7 zwischen Flugobjekt 1 und Sender des Satelliten 8 maximal nähert.

Üblicherweise wird die Position des Flugobjektes 1 unabhängig von dem vorliegenden Verfahren bestimmt. Dies geschieht beispielsweise über das bekannte GPS-System (Global Positoning System), mit dessen Hilfe die Positionswerte der Projektil/Rakete ermittelt werden. Bei Kenntnis der Position des Flugobjektes 1 ist auch die Richtung der VRA 6 bekannt. Aus den Positionen von Flugobjekt 1 und Satellit 8 kann nun die Richtung der Sichtlinie 7 bestimmt werden. Der Geschwindigkeitsvektor 4 wird dabei als Referenzwert für die Rollachse 5 des Flugobjektes 1 gewählt.

Rollachse 5, VRA 6 und Sichtlinie 7 lassen die Bestimmung der Rollage eines Referenzpunktes (z.B. Antennenzentrum) zum Zeitpunkt, in dem die Hauptantennenachse 3 mit der Sichtlinie 7 zusammenfällt, zu. Zwischen diesen Zeitpunkten wird der Rollwinkel w berechnet und zwar aus der Rollfrequenz f und der Zeitspanne nach der letzten Referenzmessung.

## Patentansprüche

1. Verfahren zum Bestimmen der Rolllage eines rollenden Flugobjektes (1) mit Funkempfänger, insbesondere zur Lenkung eines/r ballistisch fliegenden Projektils/Rakete mit Rollausgleich, wobei eine Position des Flugobjektes (1) und sein Geschwindigkeitsvektor (4) ermittelt werden, der Geschwindigkeitsvektor (4) des Flugobjektes (1) als Referenz für seine Rollachse (5) gewählt wird und eine Sichtlinie (7) aus den bekannten Positionen von Flugobjekt (1) und Sendequelle bestimmt wird,
**dadurch gekennzeichnet,**
**dass** die Rolllage des Flugobjektes (1) aus dem/n Zeitpunkt/en, in dem/nen sich die Hauptantennenachse (3) der Sichtlinie (7) maximal nähert oder mit ihr zusammenfällt, ermittelt wird.

2. Verfahren nach Anspruch 1, **dadurch gekennzeichnet, dass** als Sendequelle ein Sendesatellit (8) mit bekannter Position verwendet wird.

3. Verfahren nach Anspruch 1 **dadurch gekennzeichnet, dass** eine boden- oder fahrzeuggestützte Sendequelle verwendet wird.

4. Verfahren nach einem der Ansprüche 1 bis 3, **dadurch gekennzeichnet, dass** zur Bestimmung der Sichtlinie (7) ein Signalmaß (A) für das empfangene Signal gebildet wird.

5. Verfahren nach Anspruch 4, **dadurch gekennzeichnet, dass** das Signalmaß (A) korreliert wird.

6. Verfahren nach wenigstens einem der Ansprüche 1 - 5, **dadurch gekennzeichnet, dass** mehrere Sendequellen und/oder mehrere Antennen (2), verteilt über den Umfang des Flugobjekts (1) zur Bestimmung der Rolllage benutzt werden.

7. Verfahren nach wenigstens einem der Ansprüche 1 - 6, **dadurch gekennzeichnet, dass** die Position des Flugobjektes (1), beispielsweise mittels GPS, und dadurch auch seine vertikale Referenzachse (VRA 6) ermittelt wird.

8. Verfahren nach Anspruch 7, **dadurch gekennzeichnet, dass** zwischen den Zeitpunkten, in denen sich die Hauptantennenachse (3) der Sichtlinie (7) maximal nähert oder mit ihr zusammenfällt, der Rollwinkel (w) des Flugobjektes (1) aus der Rollfrequenz (f) und der Zeitspanne nach der letzten Referenzmessung ermittelt wird.

## Claims

1. Method of determining the roll attitude of a rolling flying object (1) having a radio receiver, more especially for guiding a ballistic flying projectile/rocket with roll compensating movement, a position of the flying object (1) and its velocity vector (4) being ascertained, the velocity vector (4) of the flying object (1) being selected as the reference for its roll axis (5), and a line of sight (7) being determined from the known positions of the flying object (1) and the transmitting source, **characterised in that** the roll attitude of the flying object (1) is ascertained from the point or points in time at which the principal antenna axis (3) approximates to the line of sight (7) to the maximum extent or coincides therewith.

2. Method according to claim 1, **characterised in that** a transmitting satellite (8) with a known position is used as the transmitting source.

3. Method according to claim 1, **characterised in that** a ground-supported or vehicle-supported transmitting source is used.

4. Method according to one of claims 1 to 3, **characterised in that** a signal parameter (A) for the received signal is formed in order to determine the line of sight (7).

5. Method according to claim 4, **characterised in that** the signal parameter (A) is correlated.

6. Method according to at least one of claims 1 - 5, **characterised in that** a plurality of transmitting sources and/or a plurality of antennas (2), distributed over the circumference of the flying object (1), are used in order to determine the roll attitude.

7. Method according to at least one of claims 1 - 6, **characterised in that** the position of the flying object (1) is ascertained, for example, by means of GPS, and its vertical reference axis (VRA 6) is also ascertained thereby.

8. Method according to claim 7, **characterised in that**, between the points in time at which the principal antenna axis (3) approximates to the line of sight (7) to the maximum extent or coincides therewith, the roll angle (w) of the flying object (1) is ascertained from the roll frequency (f) and the time interval after the last reference measurement.

## Revendications

1. Procédé de détermination de la position angulaire d'un objet volant en rotation sur lui-même (1) avec un récepteur radio, en particulier pour guider un projectile/une fusée volant de manière ballistique à équilibrage de rotation, une position de l'objet volant (1) et son vecteur de vitesse (4) étant déterminés, le vecteur de vitesse (4) de l'objet volant (1) étant choisi comme référence pour son axe de rotation sur lui-même (5) et une ligne de visée (7) étant déterminée à partir des positions connues de l'objet volant (1) et d'une source de transmission, **caractérisé par le fait que** la position angulaire de l'objet volant en rotation sur lui-même (1) est déterminée à partir du ou des moments où l'axe d'antenne principale (3) se rapproche au maximum de la ligne de visée (7) ou coïncide avec celle-ci.

2. Procédé selon la revendication 1, **caractérisé par le fait qu'**il est utilisé, comme source de transmission, un satellite de transmission (8) à position connue.

3. Procédé selon la revendication 1, **caractérisé par le fait qu'**il est utilisé une source de transmission appuyée au sol ou sur un véhicule.

4. Procédé sur l'une des revendications 1 à 3, **caractérisé par le fait qu'**il est formé, pour la détermination de la ligne de visée (7), une mesure de signal (A) pour le signal reçu.

5. Procédé selon la revendication 4, **caractérisé par le fait que** la mesure de signal (A) est corrélée.

6. Procédé selon au moins l'une des revendications 1 à 5, **caractérisé par le fait qu'**il est utilisé plusieurs sources de transmission et/ou plusieurs antennes (2), réparties sur le pourtour de l'objet volant (1), pour déterminer la position angulaire.

7. Procédé selon au moins l'une des revendications 1 à 6, **caractérisé par le fait que** la position de l'objet volant (1) est déterminée, par exemple, par GPS et, de ce fait, également son axe de référence vertical (VRA 6).

8. Procédé selon la revendication 7, **caractérisé par le fait que**, entre les moments où l'axe d'antenne principale (3) se rapproche au maximum de la ligne de visée (7) ou coïncide avec celle-ci, l'angle de rotation (w) de l'objet volant (1) est déterminé à partir de la fréquence de rotation (f) et du laps de temps après la dernière mesure de référence.
